# EUROPEAN PATENT SPECIFICATION

(11) **EP 1 500 153 B1**
(45) Date of publication and mention of the grant of the patent: **05.10.2011**
(21) Application number: 03747005.1
(22) Date of filing: 16.04.2003
(51) Int. Cl.: H01M 2/38, H01M 2/12

(54) **IMPROVED ELECTROLYTE MIXING IN WET CELL BATTERIES**
VERBESSERTE ELEKTROLYTMISCHUNG IN NASSZELLENBATTERIEN
MELANGE AMELIORE D'UN ELECTROLYTE DANS DES ACCUMULATEURS MOUILLES

(30) Priority: 16.04.2002 US 372977 P; 09.07.2002 US 394695 P
(43) Date of publication of application: 26.01.2005
(73) Proprietor: Philadelphia Scientific, Montgomeryville, PA 18936 (US)
(72) Inventor: JONES, William, 40475 Freeport (BS)
(74) Representative: Callies, Rainer Michael
(86) International application number: PCT/US2003/011726
(87) International publication number: WO 2003/090306

(56) References cited:
- US-A- 4 221 847
- US-A- 4 308 322
- US-A- 4 603 093
- US-A- 5 173 374
- US-A- 5 665 484

## Description

### Background

### 1.Field of the Invention

The present invention relates generally to re-chargeable cell batteries; such as flooded lead acid batteries, and more particularly to the mixing of eletrolyte within the batteries to minimize electrolyte stratification.

### 2. Background of the invention

Flooded lead-acid batteries in deep-cycles service risk acid stratification when strong acid emerging from the plates during charge sinks to the bottom of the cells. Electrolyte stratification is believed to be due to the changes of the specific weight of the sulfuric acid during charge and discharge of the battery. For example, during charge, concentrated sulfuric acid is released from the active material in the plates, Increasing the local concentration of the acid (stronger concentration). Having a higher specific weight, the strong acid moves by convection and collects near the lower part of the battery cell. The stronger acid can cause damage to the negative plates and must be eliminated by mixing with the weak acid at the top of the cells. Moreover, acid readings taken of the battery after charging may be incorrect due to this phenomena.

One remedy for stratification used for many years its overcharging. The battery cells are simply overcharged with about 20% more ampere-hours than consumed during the preceding discharge, yielding a so-catied "charge factor" of 1.20. This causes bubbles to form that mix the electrolyte as they float up to the surface. The amount of overcharge necessary, however, causes higher energy costs, more positive grid corrosion and more water loss, all of which leads to higher maintenance.

In recent years, with the development of low-maintenance batteries, less water loss in the battery is required. Thus, improved methods of acid mixing have been accomplished which use lower charge factors. Two methods that have become commercially important are pulse charging and air-mixing.

Pulse charging is a method whereby the battery charger gives the battery short pulses of relatively high current to cause intermittent gassing in the cells. This method can reduce charge factors to about 1.06.

The major advantage of pulse charging is its simplicity; it requires no additional hardware on the battery or the charger as the mixing is controlled simply by modifying the electronic controls in the charger. Another advantage is that there cannot be an unequal distribution of the mixing effect since all the cells will always get the same amount of gassing.

A disadvantage of pulse charging is that the battery needs a special charger so that if a new battery is purchased, an expensive new charger must also be purchased. Also, since pulse charging can only be applied toward the end of the charging period, it is not compatible with "opportunity charging" where a battery is partially re-charged several times during a shift so as to increase its effective capacity.

Air-mixing is a method whereby air is bubbled into the cell to mix the acid; this method can reduce the charge factor to 1.04 or less. An air pump is usually installed inside the charger and connected by a long tube to a manifold on the battery from which air is fed by small-bore tubes to the bottom of each cell.

A major advantage of an air-mix system is that it has the potential for very low charge factors because it does not involve electrolysis. In areas with dry ambient air, however, the dry air used for mixing can cause some evaporation of the water. Another advantage is that it can be used at any time and is, therefore, compatible with opportunity charging.

A disadvantage with an air-mix system, however, is that it can have poor distribution of air flow between cells. Another disadvantage is that the air pump is in the charger. This air pump is connected to the battery via a long tube with a quick-disconnect coupling so that the battery may be disconnected from the charger before being driven away. The problem is that the operator must now disconnect two couplings; one for the electrical charging and one for the air-mix. Sometimes the operator may forget and damage the tubing and the couplings. One solution to this problem is a dual coupling whereby the electrical and air-mix couplings are made simultaneously in one coupling. This has helped, but if acid gets into the air-mix tubing to the coupling, it can drip on to the electrical connections and corrode them. In practice, the battery will often fail to get a proper charge which is a serious fault if there is no substitute battery.

Presently known acid mixing means also have the disadvantage in that they are not suitable for "semi-flooded" cells. A "semi-flooded" cell (see U.S. Patent No. 6,274,263 to W. Jones) is a "sealed", valve regulated lead-acid cell (VRLA) in which the electrolyte is free liquid and not absorbed in a gel or absorbed glass mat (AGM) material as traditional VRLA batteries. Since it is designed to be a maintenance-free product, it cannot use pulse charging because of the higher charge factor, and cannot use air mixing because oxygen in air will discharge the negative plates. Thus an improved form of electrolyte mixing is needed which can also be used for "semi-flooded" batteries.

U,S. Patent 4,308,322 discloses a pump for a battery cell which utilizes battery gas for circulating a body of liquid electrolyte in the cell. A motor is not necessary to drive the pump.

In U.S. Patent No. 5,665,484 an apparatus for circulating liquid electrolyte within cells of a battery is described. Pumps which are hydraulically connected to each cell of a battery are actuated by a fluid. The actuating fluid is supplied by a hydraulic power supply comprising further pump means that alternately supply positive and negative pressure in order to move the fluid for actuating the cell pumps.

As presently known means for acid mixing have disadvantages, an improved means is desirable. Such a system that would be of commercial benefit is the intent of the present invention.

U.S. Patent 3,257,241 relates to galvanic batteries, i.e. batteries which are not re-chargeable. A pump is used to increase the flow of the electrolyte across the plates to maintain the voltage as the electrolyte is depleted. If these batteries are discharged at a high rate, this causes temporary depletion of the active materials. This disadvantage shall be eliminated by feeding fresh electrolyte to the plates during discharge. Thus, the pump is not used in order to minimize stratification of the electrolyte in conjunction with charging the battery.

### Summary of the Invention:

The present invention provides an improved means of mixing acid in a battery cell that avoids many of the disadvantages of prior known mixing devices. Broadly, the methods of the present invention provide for the mixing of electrolyte in a battery cell using a pump to draw fluid from one level of the battery and discharging it to another level, whereby the pump is driven by an electric motor. In one method, according to claim 1, the fluid pumped is the electrolyte which is pumped from a level in the battery where the acid has one concentration to a level where the acid has a different concentration, thereby mixing the acids of the two different concentrations. By this means the acids of different specific weights mix to minimize stratification of the electrolyte. Embodiments of this method are stated in sub-claims 2 and 3. In another method, according to claim 4 and sub-claims 5 to 7, the fluid pumped may be gas which, when pumped into the electrolyte, mixes the acid.

### Brief Descriptions of the Drawings:

The foregoing summary, as well as the following detailed description will be better understood when read In conjunction with the figures attached hereto. For the purpose of illustrating the invention, there is shown in the drawings several embodiments. It is understood, however, that this invention is not limited to the precise arrangement and instrumentalities shown.
Figure 1 shows one embodiment of the invention using an impeller pump;
Figure 1A show a more detailed view of the pump in Figure 1;
Figure 2 shows another embodiment of the present invention using a positive displacement pump to move the electrolyte;
Figure 2A show a more detailed view of the pump in Figure 2;
Figure 3 shows a third embodiment of the present invention using a piezo pump to move the electrolyte; and
Figure 4 shows a fourth embodiment of the present invention using a displacement pump to move gas within the battery cell.

### Detailed Description of the Invention:

The present invention provides novel methods for mixing electrolyte in wet cell batteries, e.g., flooded batteries. (The term "electrolyte" and "acid" are used interchangeably herein). One application for the present invention is deep-cycle lead-acid batteries as used in fork-lift trucks although it can be applied to any cycling application such as solar batteries, electric vehicles and so on, It is one aim of the present Invention to mix the add In all types of flooded cells including conventional "flooded" cells and also the new, sealed semi-flooded" cells. Described below are several powered devices to mix acid effectively with little or no water wastage.

In the present invention, preferably a separate individual pump is attached to each cell so that each cell receives ideal mixing with no distribution problems. An electric motor, which can be small, is used to drive a pump to circulate the acid mechanically in a cell. The pump may be hydrodynamic (Impeller type) or hydrostatic (positive displacement type) or any other type as is well known in the art of pumps. Various examples of these are described in further detail below.

It is possible to mix acid either indirectly (e.g., by using gas bubbles) or directly by moving the liquid acid itself. Both methods are effective. If the liquid acid itself is pumped directly, a very small flow rate is sufficient to mix the entire bulk of the acid in the cell. Even on a relatively large lead-acid cell, a flow rate of acid of about 100cc/minute for 15 minutes is enough to overcome stratification. With gas mixing, more flow of gas is preferred and a flow of gas up to about twice that of electrolyte flow for the same time interval is preferred. More particularly, a lead acid battery will generally have at least 1000 cc of acid per 100 Ah. That is, a typical 500 Ah cell will have at least five liters of active acid. A reasonable aim of an acid mix system is to move all this acid once during every charge cycle. For example, a 500Ah cell with 5000cc of acid will be mixed at the following combination of acid flow rates and times:
50cc/min for 100 minutes
100cc/min for 50 minutes
200cc/min for 25 minutes

Extra time should be allowed as a safety factor. The use of gas or air bubbles instead of moving the acid directly requires a higher flow rate for the gas or air, up to twice the flow rate as with acid flow. In either case, lower flow rates may be compensated for by longer mix times. Of course, the size and the internal design of the cell, particularly with regard to the ease of circulation is a significant variable. The more freely the acid can circulate, and the better the mixing action, the less flow rate is required. Larger cells need longer mix times.

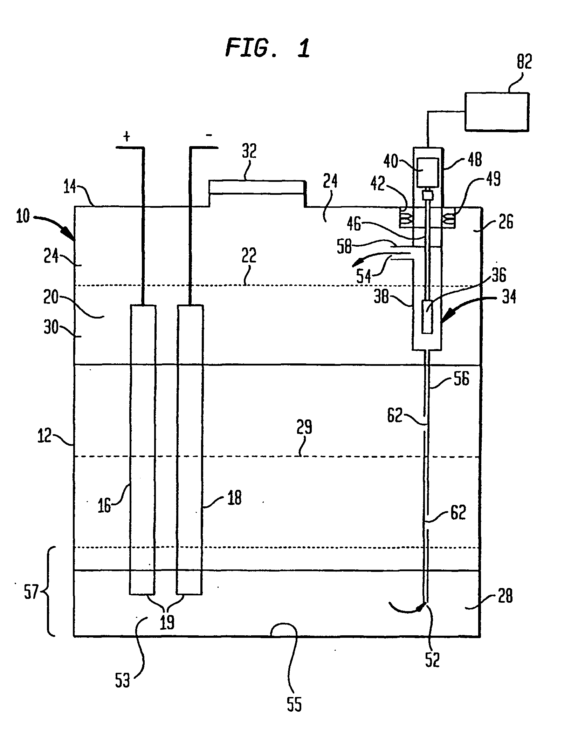

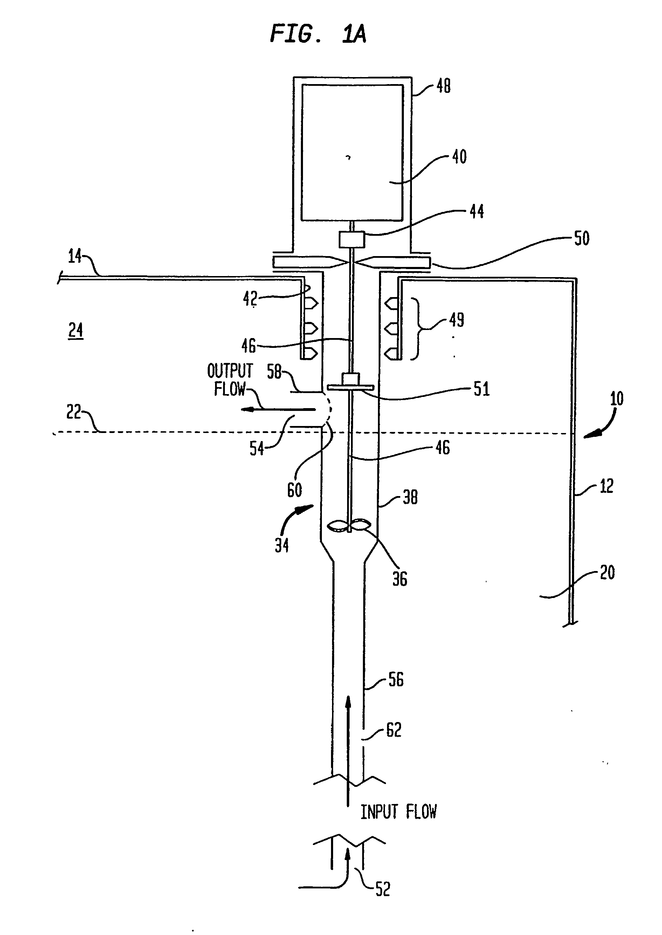

**Hydrodynamic liquid pump.** Shown in Figures 1 and 1A is a simple and effective embodiment of the present invention whereby a pump 34, here an axial flow impeller pump, raises the strong acid from the bottom of the cell and discharges it at the top of the cell 10 where it is diluted by mixing with the weak acid. The lead-acid battery cell 10 has a battery cell housing 12 and a cell cover 14 covering the top of the housing to enclose the cell. Within the housing 12 are positive and negative plates 16, 18 respectively, and liquid electrolyte 20 in contact with the plates as is known in the art. In lead acid cells the electrolyte is sulfuric acid. The plates 16, 18 are submerged in the electrolyte 20 which has a top liquid level or surface 22. A head space 24 is the area between the top liquid level 22 and the cover of the cell 14 and contains gas 26.

The housing 12 (or cell 10) has a lower section 28, and an upper section 30 which includes the upper electrolyte as well as the head space 24. For purposes of this description, the lower section 28 can be considered the section of the cell below the centerline 29 of the electrolyte 20 at its normal operating level, and the upper section 30 the section of the cell above the centerline of the electrolyte 20 at its normal operating level. A vent cap 32 is provided on the cover 14 of the cell 10 which may be a conventional vent orifice as used in a flooded cell or a one-way pressure-relief valve as used in semi-flooded VRLA cells.

During charge of the battery cell 10, the acid 20 stratifies into weak acid (having a lighter specific gravity) at the upper section 30 of the cell 10 and strong acid (heavier specific gravity) at the lower section 28 of the cell. This can be countered by mixing the stronger and weaker acids as discussed below.

A pump 34 suitable for pumping electrolyte 20 is provided. In the present embodiment this pump takes the form of a hydrodynamic pump having an impeller 36 within a pump enclosure 38, and which is mounted within the housing 12 as shown. The term impeller is used broadly herein, suitable impellers can include typical traditional and propeller shaped impellers, or other suitable impeller means capable of moving liquids, e.g., augers, plastic screws, and coiled stainless steel springs.

A small electric motor 40 sealingly mounted above an access opening 42 in the cover 14 is coupled through a coupling 44 or other suitable attachment means to a shaft 46 that extends into the pump enclosure 38 to the impeller 36. A motor enclosure 48 covering the motor 40 and a shaft seal 50 prevents acid and battery gasses from getting into the motor enclosure 48. The shaft 46 also extends through a deflector 51 which diverts the acid out the pump 34 as further described below. The access opening 42 should be wide enough to allow installation and removal of the pump 34 and attached items as may be necessary for installation and maintenance. To prevent acid 20 from leaking from the access opening 42, a static seal 49 made of suitable seal material such-as soft plastic or rubber resistant to electrolyte, or o-ring seals, may be used to seal against the enclosure 38. The impeller 36 of the pump 34 must preferably be below the liquid surface 22 to function properly.

The pump 34 has a first port 52 through which electrolyte 20 is drawn into the pump 34 and a second port 54 through which the pumped electrolyte 20 is discharged back into the housing 12 as illustrated. The first port 52 is positioned in the lower section 28 of the cell 10, and preferably near the bottom of the cell 10 to draw in the strong acid. In the illustrated embodiment, the port 52 is formed as an opening at the bottom of a flow tube 56 connecting the port 52 to the pump enclosure 38 so as to allow the pump 34 to draw electrolyte from the battery cell through the port 52 into the pump 34. The flow tube 56 can be an integral part of the pump 34, or a separate tube attached to the pump.

The second port 54 is positioned in the upper section 30 of the cell 10, and can be located below the electrolyte level 22 or above the electrolyte level 22 as shown. In the illustrated embodiment, the port 54 is formed as an opening at the end of a second flow tube 58 connecting the port 54 to the pump enclosure 38 so as to allow the pump 34 to discharge electrolyte drawn from the lower section of the cell 10 to the upper section of the cell. The flow tube 58 can be an integral part of the pump 34, or a separate tube attached to the pump, or the port 54 can be provided in the enclosure 38 without the tube 58 as shown in dotted line 60.

In operation, when the electric motor 40 is turned on to rotate the impeller 36, the pump 34 draws stronger acid from the lower section 28 of the cell 10 through the port 52 through flow tube 56 and delivers it to the upper section of the cell through the port 54. In this manner the acid of higher specific weight at the lower section is moved to and mixed with the acid of lower specific gravity at the upper section.

Since the heavier acid settles to the bottom of the cell, it is preferable that the port 52 for the input to the pump be located near the bottom of the cell, or at least near the bottom 19 of the plates 16, 18 so as to mix the acid 20 that is in contact with the plates 16,18. Some cells 10 have an area 53 below the plates that contains acid as well. As sentiment may collect at the bottom 55 the cell 10, it may be preferable to place the port 52 at a level near the bottom of the plates, but not near the bottom 55 of the cell to avoid drawing in the sentiment. Also, discharging the heavier acid at the upper most level of the electrolyte or above it may aid mixing:

It has been found that strong acid may sink again to the bottom of the cell 10 if it is not quickly mixed. To prevent this from happening, secondary openings or ports 62 may be placed in the side of the flow tube 56 at a level higher than the opening 52 so as draw in weaker acid to pre-mix with the stronger acid from the port 52 before the acid is discharged into the upper section of the cell 10.

This embodiment has worked effectively with a small dc motor drawing 0.5 amps at 3 volts driving a small propeller shaped impeller. Preferred flow rates of acid to be pumped for the typical cell are between about 50 to 100 cc/min. The various other impellers tested ranged from a steel drill bit, a plastic screw and a coiled stainless steel spring. Each pumped enough liquid to de-stratify a large cell in a few minutes. Since several hours are available to carry out a full charge, this method is practical and effective. The flow tube 56 and port 52 may be-of any suitable size, 1/16 inch (0.159cm) internal diameter tubing being one possibility for cells having little room for the tubing, 1/8 inch (0.317cm) internal diameter tubing being possible-for use with cells having more room. The shaft and various pieces should be made of acid resistant materials such as plastics, e.g., polypropylene. A suitable material for the shaft seal is viton.

This method of using a separate pump 34 on each cell 10 meets all the criteria listed above for an improved acid mixing system. It assures even distribution of mixing, no acid short circuits between cells, and a low charge factor as there is no electrolysis and no evaporation. It makes the battery autonomous from the charger, requiring no tubing, no air-pumps and no special chargers. It permits opportunity charging and is compatible with sealed semi-flooded VRLA cells because it does not introduce air into the cells. Therefore, a separate pump on each cell has significant commercial advantages.

The pump shown in Figure 1 is a hydrodynamic type having no valves. It may be run either in forward as discussed above or in reverse where the weaker acid from the upper section 30 is drawn in to the pump 34 through port 54 and discharged to the lower section 28 through the port 52. This reverse operation requires that the discharge port 54 (which now operates as the intake) be below the liquid level 22. Both arrangements, forward and reverse, function effectively.

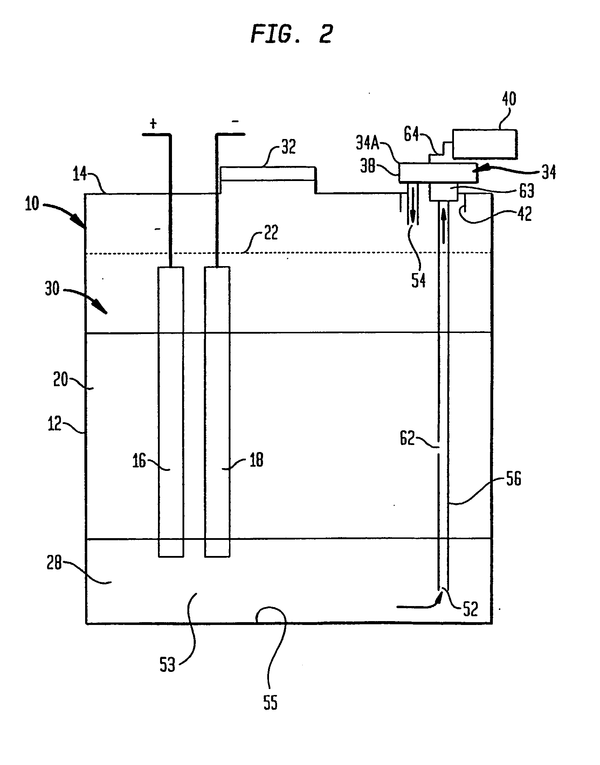

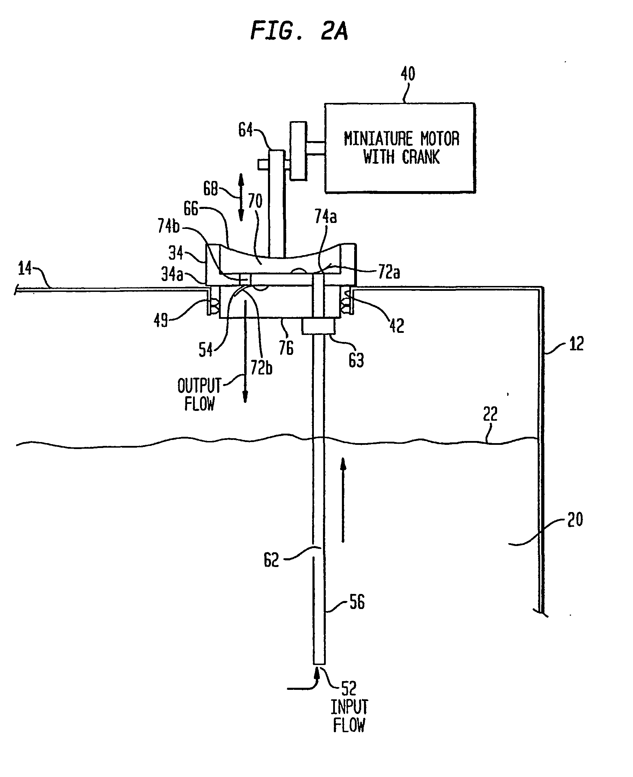

**Hydrostatic liquid pump.** An embodiment of the present invention using a hydrostatic type pump with a positive displacement mechanism, of which there are many variations, is now described with reference to Figures 2 and 2A where the cell 10 is similar to that of Figure 1, and elements similar to those of Figure 1 have the same reference numbers.

Shown in Figures 2 and 2A is an embodiment where the pump 34 is a small diaphragm pump 34a driven by a small electric motor 40. The motor 40 turns a crank 64 that moves a flexible diaphragm 66 (which could, as one alternative, be a piston) back and forth in the directions 68 as shown to increase and decrease the volume of the pump chamber 70 in a cyclic manner. Check valves 72a, 72b, mounted inside and outside of the chamber 70 as shown, are used to close the inlet 74a and the outlet 74b of the diaphragm pump chamber 70 so as to permit flow in one direction only as is known in the art for such diaphragm pumps. In the illustrated embodiment the check valves 72a, 72b take the form of flapper valves, other known check valves which may be suitable include umbrella valves and duck bill valves. As an example, when the diaphragm 66 is moved upwardly by the crank 64, the volume of the chamber 70 increases, drawing in fluid through inlet 74a, the flow of which keeps the check valve 72a open. On the other hand, this same drawing action pulls the check valve 72b closed. The process is reversed when the direction of the diaphragm is reversed, discharging the fluid from the outlet 74b. The motor 40 and crank 64 can be included within an enclosure similar to that described for the previous embodiment.

The diaphragm pump 34a is mounted on a hollow plug 76 sealingly fitted within the access opening 42 having a static seal 49 as described above. The diaphragm pump 34a can be positioned out of the electrolyte and above the cell 10 as shown as the pump can draw the fluid, from the cell up into it.

In operation, as in the previously described embodiment of Figure1, the pump 34 draws electrolyte 20 from the lower section 28 of the cell 10 through the port 52 through the flow tube 56 and delivers it to the upper section 30 of the cell through the port 54 (which is also outlet 74b in this case). A suitable particle filter 63 may be incorporated in the input path of the electrolyte in flow tube 56 to prevent malfunction of the pump 34.

Auxiliary feed ports 62 may be provided in the flow tube 56 to pre-mix the strong and weak acids before discharge as previously described. Also, the direction of the flow of acid may be reversed by switching the two check valves of the diagram pump, although the port 54 would need to be extended to the electrolyte 20 by a flow tube (not shown). Both forward and reverse pumping arrangements are believed to function effectively. Materials suitable for use with electrolyte should be used for the various elements of the pump.

Another type of known diaphragm pump uses a solenoid to move the diaphragm within a housing that has opposing check valves mounted in the pump inlet and outlet, all contained in a integral unit. Another variation of this method is the use of compressed gas to move the diaphragm. In this variation, a source of alternating pressure such as compressed air, either on the battery or otherwise, provides the motive power to drive the pumps. Another type of hydrostatic liquid pump is a piston pump, such miniature pumps having a solenoid operated piston with a spring return.

Piezo-electric pump. Another type of hydrostatic pump is a piezo-electric liquid pump which is a special case of the hydrostatic diaphragm pump already described above. The "motor" and the "diaphragm pump" are combined into one simple unit and driven by an oscillating voltage which flexes the diaphragm. Unlike conventional rotating dc motor/pump systems, there are no brushes or commutators to wear out, no shaft bearings to seize and, most importantly, no shaft seals to leak, Such pumps 34 tend to have a very long service life with great reliability. This is a major advantage in the particular application.

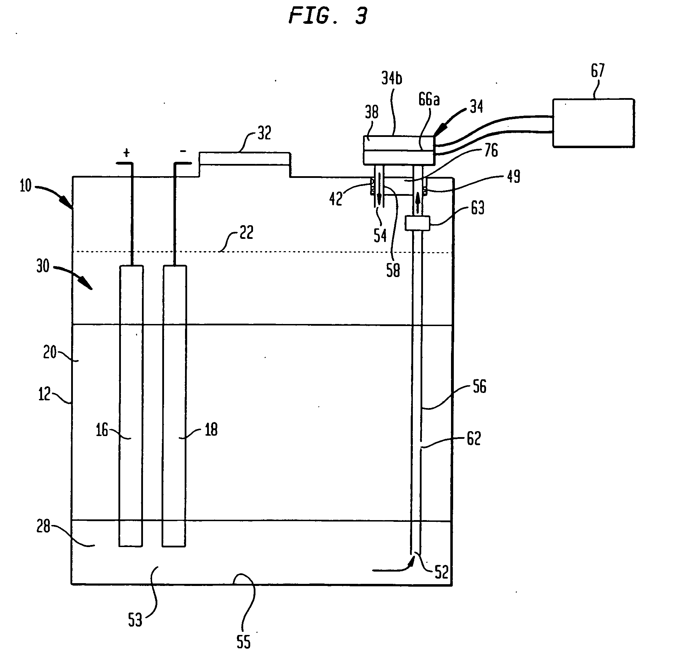

Figure 3 shows a piezo-electric pump 34b in schematic form mounted on a plug 76 which fits in and seals closed the access hole 42 as described above. The Piezo pump has a vibrating diaphragm 66a driven by a driver/controller electronic control 67. As it vibrates, the diaphragm 66a draws electrolyte from the lower section 28 of the cell 10 through the port 52 through the flow tube 56 and delivers it to the upper section 30 of the cell through the port 54. Auxiliary feed ports 62 may be located on the flow tube 56 to pre-mix the strong acid with the weak acid before discharging. A particle filter 63 may be added to the input to prevent malfunction of the pump

A small Piezo pump with a 1 inch (2.54cm) diameter diaphragm can pump over 50 cc/minute of liquid at a frequency of 60Hz drawing acid up through a 1/16 inch (0.159cm) bore tube 27 inches (68.6cm) long (the height of a large fork-lift truck cell). A single, central electronic controller-can be used to drive several such pumps simultaneously at similar flow rates and, therefore, provide equal mixing in each cell. The diaphragm of the Piezo pump should be made from a corrosion resistant material, such as Hastelloy-C, or else have a corrosion resistant covering. The pump can be protected by a particle filter to prevent blockage, but this is not shown for sake of clarity. A maker of piezo pumps that may be suitable for the present invention is PAR Technologies, Inc. of 700 Corporate Drive Newport News, VA 23602, who make a line of piezo pumps, such as model numbers LPD-10S through LPD-400S which may be suitable or adaptable for the present invention.

A variation of this method is where the pump is physically moved away from the opening 42 to a different location on the cell 10 or the battery so that it is connected to the opening by, for example, flexible tubing. This case is not illustrated due to its obviousness.

In alternative and more specific terms, the first port 52, located in the lower section 28 of the cell, can preferably be boated in a lower one fourth 57 of the height (at liquid surface 22) of the electrolyte 20.

**Hydrostatic gas pump**. This embodiment uses a positive displacement pump 34 to pump a gas to the lower section of the cell.

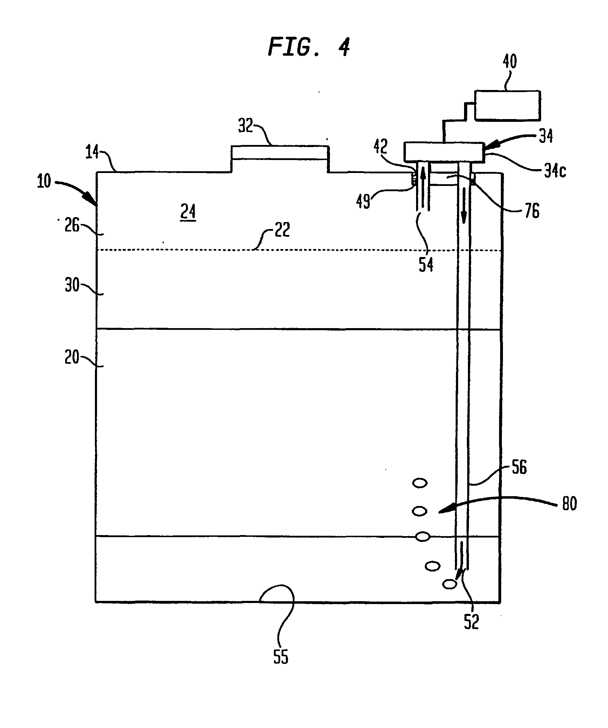

Figure 4 shows a gas diaphragm pump 34c that attaches to individual cells 10 which are similar to that of Figures 2 and 2A, and elements similar to those of Figure 2 and 2A have the same reference numbers (plates 16 and 18 not shown). A small electric motor 40 operates a diaphragm within the diaphragm pump 34c in a manner similar to that described above with reference to Figures 2 and 2A and draws gas from the head space 24 of the cell 10 through the port 54 located in the head space 24 where the gas is discharged from port 52 as gas bubbles 80 which rise to the surface 22, mixing the acid. The diaphragm pump is similar to that described in reference to Figure 2A, and operates in a similar manner except that it pumps gas instead of liquid.

The gas 26 in the head space 24 of the cell 10 is nearly saturated with water so, when it mixes the acid in a flooded cell it will not waste water by evaporation. This method may also be used for "seated" VRLA cells such as the "semi-flooded" call described earlier as it does not use oxygen-carrying air but the hydrogen-rich gas in the cell's head space.

With regard to any of the embodiments of the present invention, there are many other physical means by which electrical energy may be translated to a mixing motion in the acid of battery cells. Such other methods include ultrasonic pumps, bellows pumps, thermal pumps (whereby heated fluid is made to rise), magnetically driven circulation (whereby the acid is moved directly by electromagnetic forces), and so on.

The pump of the present invention, no matter which embodiment is practiced, must be turned on and off for operation. For example, in a fork-truck or, scimitar battery cell application, there may typically be a number of cells, each having a pump 34 of any the types described above and which must be turned ON and OFF as needed. This can be done by means as simple as a person operating an electrical switch to operate the pumps 34, or more sophisticated means such as with the use of an external electronic controller.

The preferred basic minimum role-of a controller is to tum the pumps ON during the re-charge cycle and OFF subsequently. In practice, however, the controlled may have many other useful functions, including the following,
- Turn the pumps ON automatically when it senses that the battery is on charge.
- Turn the pumps OFF when the battery reaches a higher voltage when mixing is not required.
- Run the pumps continuously or intermittently.
- Give more mixing at week ends and less during week days to conserve water
- Use fault detection circuits to report faults and prevent consequent damage. For example, it may detect failed pumps by current sensing.

As an example, with reference to Figure 1, a controller 82 as known in the art can be used to tum on the electricity to the pump 34 to mix the acid 20 for two minute periods every thirty minutes during an eight hour charge of the cell 10. This can extend the life of the pump and minimize the use of electricity.

The controller 82 itself may be powered off the battery cell 10 itself and therefor, be completely self-contained and independent of the battery charger and other-outside equipment. This is a vast improvement over prior air-mix systems that must be connected to a compatible charger with an air tube umbilical. With the present invention, batteries may be switched to any charger with confidence that the acid will be mixed properly.

The present invention provides numerous advantages over the prior known devices. In particular, the embodiments described above are believed to have the following advantages:
- Provide for minimal loss of water, either by electrolysis or by evaporation
- Is compatible with opportunity charging by permitting mixing at any time
- Provides uniform mixing in all cells
- Does not cause electrolyte short-circuits between cells.
- Does not corrode electrical connectors
- Is not reliant on pumps and umbilical tubes to the charger
- Does not require a special charger
- Is compatible with sealed "Semi-flooded VRLA" cells.

There are other benefits to the present invention as well. One is that the present invention provides a very substantial cost reduction relative to traditional air-mix systems. The other is that for batteries for use outside the United States, where the chargers may not be air-mix compatible, the present will provide a means for acid mixing.

Additional novel means for mixing acid is disclosed in U.S. Patent US2003148170 filed February 6, 2003

It is understood that the foregoing description is intended to describe the preferred embodiments of the present invention and is not intended to limit the invention in any way. This invention is to be read as limited only by the appended claims.

## Claims

1. A method of mixing electrolyte (20) in a re-chargeable battery comprising multiple wet cells (10), said method being in order to minimize stratification of said electrolyte (20) and comprising using a pump (34) in conjunction with charging said battery to draw electrolyte (20) from a first level of said battery cell through said pump to a second level of said battery cell where the specific weight of said electrolyte is different from that at said first level, wherein each said cell (10) has its own said pump for mixing its own said electrolyte within said cell (10), **characterized in that** said pump is driven by an electric motor (40).

2. The method of claim 1 wherein said electric motor (40) is mounted externally of said battery cell (10).

3. The method of claim 2 wherein each said cell (10) has its own said electric motor (40).

4. A method of mixing electrolyte (20) in a re-chargeable battery comprising multiple wet battery cells (10), said method being in order to minimize stratification of said electrolyte (20) and comprising:
using a pump (34) in conjunction with charging said battery to draw in fluid from a first level within said battery cell (10) and discharging it to a second level of said battery cell (10), wherein one of said first and second levels is in a lower section of the cell (10) and the other of said first and second levels is above a liquid surface level (22) of the electrolyte in a head space (24) that contains gas (26) within said cell (10), wherein said pump has an electric motor (40) configured to drive said pump, and wherein each said cell (10) has its own said pump and its own said electric motor for mixing its own said electrolyte within said cell.

5. A method in accordance with claim 4 wherein said motor (40) is mounted externally of said cell (10).

6. A method in accordance with claim 4 wherein said fluid is gas, and wherein said method comprises pumping said gas (26) from said head space (24).

7. A method in accordance with claim 1 or claim 4 further comprising the step of turning on said pump (34) when charging said battery cell (10).

## Patentansprüche

1. Verfahren zum Vermischen von Elektrolyt (20) in einer wiederaufladbaren Batterie, welche mehrere nasse Zellen (10) aufweist, wobei das Verfahren dazu vorgesehen ist, Schichtenbildung des Elektrolyts (20) zu minimieren, und die Verwendung einer Pumpe (34) in Verbindung mit einem Laden der Batterie aufweist, um Elektrolyt (20) von einem ersten Niveau der Batteriezelle durch die Pumpe zu einem zweiten Niveau der Batteriezelle zu ziehen, wo das spezifische Gewicht des Elektrolyts sich von dem bei dem ersten Niveau unterscheidet, wobei jede besagte Zelle (10) ihre eigene besagte Pumpe zum Vermischen ihres eigenen Elektrolyts innerhalb der Zelle (10) hat, **dadurch gekennzeichnet, dass** die Pumpe durch einen elektrischen Motor (40) angetrieben wird.

2. Verfahren nach Anspruch 1, wobei der elektrische Motor (40) außerhalb der Batteriezelle (10) befestigt ist.

3. Verfahren nach Anspruch 2, wobei jede besagte Zelle (10) ihren eigenen besagten elektrischen Motor (40) hat.

4. Verfahren zum Vermischen von Elektrolyt (20) in einer wiederaufladbaren Batterie, welche mehrere nasse Batteriezellen (10) aufweist, wobei das Verfahren dazu vorgesehen ist, Schichtenbildung des Elektrolyts (20) zu minimieren, und aufweist:
Verwendung einer Pumpe (34) in Verbindung mit einem Laden der Batterie,
um Fluid von einem ersten Niveau innerhalb der Batteriezelle (10) einzuziehen und es in einem zweiten Niveau der Batteriezelle (10) auszugeben, wobei eines des ersten und des zweiten Niveaus sich in einem unteren Bereich der Zelle (10) befindet und das andere des ersten und des zweiten Niveaus sich über einem Flüssigkeitsoberflächenniveau (22) des Elektrolyts in einem Kopfraum (24), der Gas (26) innerhalb der Zelle (10) enthält, befindet, wobei die Pumpe einen elektrischen Motor (40) hat, der konfiguriert ist, die Pumpe anzutreiben, und wobei jede besagte Zelle (10) ihre eigene besagte Pumpe und ihren eigenen besagten elektrischen Motor zum Vermischen ihres eigenen Elektrolyts innerhalb der Zelle hat.

5. Verfahren nach Anspruch 4, wobei der Motor (40) außerhalb der Zelle (10) befestigt ist.

6. Verfahren nach Anspruch 4, wobei das Fluid Gas ist und wobei das Verfahren ein Pumpen des Gases (26) von dem Kopfraum (24) aufweist.

7. Verfahren nach Anspruch 1 oder Anspruch 4, welches ferner den Schritt des Einschaltens der Pumpe (34), wenn die Batteriezelle (10) geladen wird, aufweist.

## Revendications

1. Procédé pour mélanger un électrolyte (20) dans une batterie rechargeable comprenant plusieurs cellules de pile liquide (10), ledit procédé étant prévu afin de minimiser la stratification dudit électrolyte (20) et comprenant l'étape consistant à utiliser une pompe (34) conjointement avec l'étape consistant à charger ladite batterie pour aspirer l'électrolyte (20) d'un premier niveau de ladite cellule de batterie par ladite pompe jusqu'à un deuxième niveau de ladite cellule de batterie où le poids spécifique dudit électrolyte est différent de celui qui existe audit premier niveau, dans lequel chacune desdites cellules (10) a sa propre pompe pour mélanger son propre électrolyte à l'intérieur de ladite cellule (10), **caractérisé en ce que** ladite pompe est entraînée par un moteur électrique (40).

2. Procédé selon la revendication 1, dans lequel ledit moteur électrique (40) est monté extérieurement sur ladite cellule (10).

3. Procédé selon la revendication 2, dans lequel chacune desdites cellules (10) a son propre moteur électrique (40).

4. Procédé pour mélanger un électrolyte (20) dans une batterie rechargeable comprenant plusieurs cellules de pile liquide (10), ledit procédé étant prévu pour minimiser la stratification dudit électrolyte (20) et comprenant l'étape consistant à :
utiliser une pompe (34) conjointement avec l'étape consistant à charger ladite batterie pour aspirer du fluide d'un premier niveau à l'intérieur de ladite cellule de batterie (10) et le décharger à un deuxième niveau de ladite cellule de batterie (10), dans lequel l'un desdits premier et deuxième niveaux est dans une section inférieure de la cellule (10) et l'autre desdits premier et deuxième niveaux est au-dessus d'un niveau de surface de liquide (22) de l'électrolyte dans un espace de tête (24) qui contient du gaz (26) à l'intérieur de ladite cellule (10), dans lequel ladite pompe a un moteur électrique (40) configuré pour entraîner ladite pompe, et dans lequel chacune desdites cellules (10) a sa propre pompe et son propre moteur électrique pour mélanger son propre électrolyte à l'intérieur de ladite cellule.

5. Procédé selon la revendication 4, dans lequel ledit moteur (40) est monté à l'extérieur de ladite cellule (10).

6. Procédé selon la revendication 4, dans lequel ledit fluide est du gaz, et dans lequel ledit procédé comprend l'étape consistant à pomper ledit gaz (26) dudit espace de tête (24).

7. Procédé selon la revendication 1 ou la revendication 4, comprenant en outre l'étape consistant à mettre en marche ladite pompe (34) lors du chargement de ladite cellule de batterie (10).
